# EUROPEAN PATENT SPECIFICATION

(11) **EP 2 402 379 B1**
(45) Date of publication and mention of the grant of the patent: **28.02.2018**
(21) Application number: 10168252.4
(22) Date of filing: 02.07.2010
(51) Int. Cl.: C08G 12/38, C08G 12/12, C08L 61/30, C09J 161/30

(54) **PRODUCTION METHOD OF UREA-MELAMINE-FORMALDEHYDE RESIN**
HERSTELLUNGSVERFAHREN VON HARNSTOFF-MELAMIN-FORMALDEHYD-HARZ
PROCÉDÉ DE PRODUCTION DE RÉSINE URÉE-MÉLAMINE-FORMALDÉHYDE

(43) Date of publication of application: 04.01.2012
(73) Proprietor: Société anonyme NAICOM, 5541 Hastière-par-delà (BE)
(72) Inventor: Naydenov, Igor, 107241, Moscow (RU); Lavrinenko, Alexander, 119270, Moscow (RU); Karyakin, Kirill, 105077, Moscow (RU)

(56) References cited:
- EP-A1- 0 006 112
- EP-A2- 0 323 312
- WO-A1-2007/138364
- DE-A1- 2 455 420
- FR-A1- 2 504 542

## Description

The present invention relates to chemical industry, in particular, production of synthetic resins (polymers) and directly concerns production of urea-melamine-formaldehyde resins which are widely used as manufacture hardeners for production of resin bonded and cellulose-fiber chipboards, composite materials, furniture and plywood adhesives as well as for production of various materials in construction industry and machinery manufacturing.

More specifically, the present invention relates to an environmentally sound method for the production of urea-melamine-formaldehyde resin characterized by the stagewise condensation of formaldehyde with urea and the subsequent condensation of the obtained prepolymer with melamine. Urea-formaldehyde concentrate may be used as formaldehyde feed for production of the urea-melamine-formaldehyde resin. The condensation with urea is performed in three stages by introducing urea batchwise. The process requires media with alternating acidity and heating supply. Deionized water may be used as viscosity regulator. Borax may be introduced in the reaction mixture in the course of the co-condensation with melamine.

The obtained resin contains high concentrated dry residue, inconsiderable concentration of free formaldehyde and is stable during storage. It may be used as chemical hardeners, e.g., for production of resin bonded and cellulose-fiber chipboards and other composite materials.

All types of composite boards that have been prepared with urea-formaldehyde resins can be made with the resin of the present invention. Composite boards include, but are not limited to, particle boards and medium density fiber boards (MDF). The urea- melamine-formaldehyde resin of the present invention can be used an adhesive in both the core and the face regions of the composite board.

Urea resin production based on use of urea-formaldehyde condensate is a well known method which is applied, for example, for gluing paper, wood and carton. This production method includes the following: preliminarily prepared condensation solution with urea: formaldehyde mol ratio 1:(1.8-2.3) is mixed up with an additional amount of urea initially with pH=6-10 and then with pH=5.0 and is heated up to 90°C during 2-5 hours until the final urea : formaldehyde mol ratio equal to 1:(0.4-1.4) is reached. This stage is followed by evaporation and cooling of the reaction product (GB 1480787, 1977).

Urea-formaldehyde resin produced as described above does not provide products on its basis with sufficiently high physical and mechanical properties since it has low adhesiveness and poor technological properties, besides it is toxic.

There is a known method for preparing thermosettable urea-formaldehyde resins having a urea to formaldehyde molar ratio of 1:1 to 1:1.5 wherein urea and formaldehyde are first reacted in an aqueous solution at a molar ratio of 1:1.5 to 1:4 in the pH range between 7.5 to 10, and then condensing the reactants in a pH range from 4 to 6, thereafter adjusting the pH to 7 to 10 and adding the remaining urea to obtain a molar ratio of 1:1 to 1:1.5 and continuing the reaction until a precipitation number of 1:0.5 to 1:3 is obtained (EP 0006112, 1980).

There is also another well known commercialized industrial multistage method of urea resins production in media with alternating acidity implying production of condensate solution on the first reaction stage by mixing urea aqueous solution with formaldehyde aqueous solution neutralized with sodium hydroxide (to pH 7.0-8.65) with urea : formaldehyde mol ratio about **1.0:2.0;** heating the made-up solution up to 80-100°C during 30-60 minutes; condensing the reaction mixture in acidic medium with pH 4-5 during 30-60 minutes at 90-100°C, then subsequently neutralizing the condensation product to pH 7.0-8.0, vacuum drying at 70-80°C and the final condensation with additional amount of urea in neutral or earthy base medium at 60-70°C during 30-60 minutes until the required total urea: formaldehyde mol ratio 1:(1.0-2.0) in resin is obtained (Re.: A.Ye. Anokhin and others. Wood industry. 1992, No.2, pages 12-16).

Produced by known methods resins have modest gluing and technological properties due to low contents of dry residues, unsatisfactory characteristics of stability, adhesion and miscibility with water and high toxicity due to free formaldehyde liberation which prevent to reach quality standards of cellulose-fiber chipboards higher than 2 class (according to GOST 10632-89).

There is a known method for preparing urea-formaldehyde resins having a urea to formaldehyde molar ratio of at least 1:5 wherein urea-formaldehyde condensate is further treated with small amounts of melamine (EP 0323312, 1989).

There is also a proven technology for production of adhesives for glass fiber plastics which is based on modified melamine-formaldehyde resin obtained through condensation of melamine, formaldehyde and modifying ethylene glycol monoethyl ether at 80-85°C with pH 9-9.5 when melamine : formaldehyde mol ratio is 1:2.4 and monoethyl ether : melamine weight ratio is equal to (0.001-0.1):1 respectively (SU 729205, 1980).

This adhesive has high toxicity and rather modest characteristics of stability and miscibility with water. Such properties impede its use in wood industry, in particular for manufacturing chipboards. In terms of technical resemblance to the claimed invention the following method of urea-formaldehyde resin production is most similar to it. It is based on urea containing condensation solution subject to subsequent condensation by heating in alkali medium on the first stage; on the second stage it is condensed by heating in weak acid medium until the required viscosity is obtained and its further condensation continues with additional amount of urea; on the third stage the condensation of the reaction product is completed by heating in alkali medium with subsequent cooling. In the condensation process mono- or polybasic alcohols are added in the product (SU 763368, 1980).

The first stage of the process is performed with pH 8.85-9.1 and 96-98°C, the second stage - with pH 5.0-5.3, while urea : formaldehyde mol ratio is 1:(1.9-2.0); then the product is cooled and the third stage is performed by condensing the product with an additional amount of urea until the final urea : formaldehyde mol ratio is reached, i.e. 1:(1.40-1.45) with pH 7.5-8.3. Stabilizing alcohols are added in the amount of 8-25% of urea weight.

Resin produced as described above has E2 toxicity class if used for chipboards and simulated wood-veneer. It prevents their use for manufacturing low toxic wood composition materials. The dry residue concentration in the resin is maximum 55.5% mass, free formaldehyde concentration makes 0.3-0.4% mass, the storage duration is 3-4 months, miscibility in water is 1-2. Water miscibility factor of the produced oligomers does not exceed 1-2.5, free formaldehyde concentration is 0.38-0.58% and their storage stability is maximum 30 days.

RU 2080334, 1997, depicts another method of urea-formaldehyde resin production which is as follows: urea containing condensation solution is first subject to condensation by heating in alkali medium; condensation by heating in weak acid medium on the second stage is performed until the required viscosity is obtained; on the third stage the solution is further condensed with an additional amount of urea in alkali medium with subsequent cooling of the reaction product; then mono- or polybasic alcohols are added in the course of condensation; the condensation solution is prepared by mixing urea containing feed and formaldehyde aqueous solution until urea : formaldehyde mol ratio becomes equal to 1.0:(17-22); the final condensation with an additional amount of urea containing feed is performed with urea : formaldehyde mol ratio of 1.0:(0.95-1.3), and mono- or polybasic alcohols are added prior the final condensation in the amount of 0.01-0.2% of monomers weight.

Mono- or polybasic alcohols may be chosen from the following group: butanol, ethylene alcohol, glycerin, diethylene glycol, polyethylene glycol, and pentaerythritol.

The first stage of the condensation reaction is performed with pH 6.5-9.0 at 80-90°C during 30-60 minutes and urea or urea-formaldehyde condensate are used as urea containing feed.

Urea-formaldehyde condensate is produced by mixing up urea excess with formaldehyde aqueous solution with pH 8.2-8.8 in the presence of an alkali agent with urea : formaldehyde mol ratio (0,8-2,0):1,0; the condensation of the prepared solution is performed at 5-45°C in the presence of alkali agent and it is followed with minimum three hour ageing of the obtained product.

The following matters can be used as an alkali agent: aqueous solutions of alkali metals hydroxides, amino compounds or their mixtures.

The process second stage is performed with pH 3.9-5.0 and 80-96°C until the required viscosity is obtained; after that (if necessary) the obtained reaction mixture is cooled down to 60-85°C and dried in vacuum.

The following matters can be used as an acid agent: benzene sulphonic acid, sulfuric acid, and ammonium chloride solution.

The third stage is performed upon completion of the vacuum drying at 40-65°C and with pH 7.0-8.5 during 25-60 minutes, and urea containing feed is added in the amount providing urea : formaldehyde mol ratio 1:(0.95-1.3).

The resin produced as described has lower toxicity and higher storage stability; free formaldehyde and dry residue concentration in product resin is maximum 0.11% and 64.7% respectively.

There are other methods of modified urea-formaldehyde resins production based on urea and formaldehyde polymerization by heating in media with alternating acidity and use of catalysts and modifiers allowing in some cases to produce resins with better properties. Various organic amines including polyethylene polyamines are used as modifiers (RU 2081886, 1997).

There is also a well-known method of modified urea-formaldehyde resin production based on urea and formaldehyde condensation first in alkali medium and afterwards in acidic medium in the presence of 0.0007-0.035 mol polyethylene polyamines (PEPA) per 1 mol urea with the total urea and formaldehyde mol ratio 1:(1.1-2.2) accordingly (SU 1735312, 1992).

The fault of the final product resin produced as described above is high toxicity of the product and wood composition materials manufactured on its base corresponding to E2 toxic emission class. Apart from that the use of this modifier is limited with its high price and deficiency for resins production and therefore it cannot be applied as a constituent for production of a depressor agent in flotation process.

Reduction of urea-formaldehyde resins toxicity and their production cost is provided with the production method implying use of chloride sodium which being a waste product of polyethylene polyamines production is applied as a PEPA containing modifier for urea and formaldehyde condensation (RU 2078092, 1997).

The resin produced by using the above waste product as a modifier is not so expensive and in addition maintaining high main characteristics of the resin it has considerably lower concentration of free formaldehyde; however its properties are not in conformity with best resin standards.

RU 2249016, 2004, depicts another method of urea-formaldehyde resin production. Urea and formaldehyde condensation is performed with the initial urea and formaldehyde mol ratio of 1:(2.0-2.2) through several stages by heating in a medium with alternating acidity in the presence of polyvinyl alcohol aqueous solution used as a modifier. Urea-formaldehyde concentrate is used for condensation with urea as formaldehyde feed. The condensate contains 54-60% mass formaldehyde, 20-24 % mass urea, and the balance is water. The process is performed in the presence of demineralized water adjusting viscosity and 1-3 weight parts of the modifier per 100 weight parts of urea. First the reaction mixture is heated up to 90±2°C with pH 7.5- 8.5, then it is kept under those conditions during 20 minutes, after that the temperature is decreased to 82-85°C and with pH 4.5-5.0 the reaction mixture is aged during 20-50 minutes, then it is neutralized to pH 7.5-8.0 and an additional amount of urea is added to obtain the urea and formaldehyde mol ratio 1:1.5 and the mixture is aged during 60 minutes at 65-70°C. This method allows excluding waste water formation and increasing the process equipment capacity.

However the resin produced in the above described way still contains much free formaldehyde (0.11-0.20% mass) which limits its application. This resin is mainly used for cellular plastic production.

All the methods described above are not applicable in the production of modified urea-formaldehyde resins such as urea-melamine-formaldehyde resins.

In addition, some prior art methods imply resin vacuum processing which causes formation of waste water containing formaldehyde and besides performing this stage takes some time and consumes energy.

The technical task of the claimed invention is simplification of the process, waste water reduction, improvement of environmental aspect and energy consumption at the expense of excluding the stage of concentrating the reaction mixture in vacuum. Urea-melamine-formaldehyde resins produced in claimed mode have low concentration of formaldehyde and provide the manufactured on their basis products with high physical and chemical characteristics.

The targeted technical task is solved by producing urea-melamine-formaldehyde resin by stagewise condensation of urea with formaldehyde which is followed with co-condensation of the produced prepolymer co-condensate with melamine by heating in media with alternating acidity. After the co-condensation stage with melamine the final condensation of the reaction product with urea is performed whereas urea-formaldehyde concentrate is preferably used as formaldehyde feed. When condensing formaldehyde (such as urea-formaldehyde condensate or urea-formaldehyde concentrate) with urea the latter is introduced batchwise in three stages; the initial stage of the condensation is preferably conducted in the presence of deionized water regulating viscosity and the stage of co-condensation with melamine is preferably performed in the presence of borax, meanwhile the final condensation stage preferably continues until urea : melamine : formaldehyde mol ratio is 1:0.07:1.2.

Besides if necessary a modifier is additionally introduced in the reaction mixture on the stage of the final condensation of the reaction product with urea preferably in the amount of 0.5-5.0% mass of the total urea added. Said modifier is preferably chosen from the following group: mono- or polybasic alcohols, starch, polyvinyl alcohol, and polysiloxane liquid.

As formaldehyde feed urea-formaldehyde concentrate aqueous solution with pH=6.5-8.5 with the following composition can be used (% mass):

| | |
|---|---|
| urea | 20-24 |
| formaldehyde | 54-60 |
| methanol | <0,3. |

Thus the targeted task is solved by using urea-formaldehyde concentrate (UFC) as formaldehyde feed for condensing urea (U), melamine (M) and formaldehyde (F) by heating in the medium with alternating acidity. The process of resin formation is preferably performed in the presence of demineralized water adjusting viscosity by co-condensation with melamine preferably in alkali medium preferably in the presence of borax as buffer additive.

The gist of the solution suggested is a urea-melamine-formaldehyde synthesis that is preferably performed by condensing UFC with the 1^{st} batch of urea, preferably with the added viscosity regulator, with pH = 5.6-9.0, at a temperature below 80°C, preferably at 20-40°C. Then the second batch of urea is loaded to reach the F:U mol ratio (1.5-2.5):1.0, preferably (1.98-2.3):1.0; the mixture is heated up to 80-100°C, preferably 90-92°C. Then the temperature is decreased to preferably 80-82°C; and to reach pH=3.0-5.5, preferably 4.5-5.5, H₂SO₄ 2%-solution, e.g., is added and the acid polycondensation (and/or condensation) takes place, then ageing the mixture. Further the reaction mixture is neutralized, preferably with NaOH solution, to obtain pH=9.0-10.0. When the reaction mixture temperature is 80-88°C, melamine in the amount of 0.04-0.25 mol per 1 mol urea and preferably borax are added. The condensation is performed with pH = 9.0-10.0 at preferably 80°C.

Then the obtained product is cooled to 50-80°C, preferably 70°C, the third batch of urea and optionally further formaldehyde such as urea-formaldehyde concentrate (UFC) is added, thus reaching formaldehyde : urea mol ratio equal to (1.1-1.2):1 and then the final condensation is performed at 65-70°C with agitating. Then, the reaction mixture is cooled to 25-30°C and discharged.

Urea-formaldehyde concentrate UFC-80 or UFC-85, for example, can be used as formaldehyde feed with the following composition (% mass): urea - 20-24%, formaldehyde - 54-60%, the balance is water; UFC may be produced by oxidative hydrogenation of methanol on iron-molybdenum catalyst in the tubular reactor with subsequent chemosorption of formaldehyde containing gas with urea solution.

NaOH and H₂SO₄ aqueous solutions may be used to regulate pH of the reaction mixture. Demineralized water is preferably used to adjust viscosity of the reaction mixture, and borax (e.g., sodium tetraborate decahydrate) or any other sodium polyborate is preferably applied as a buffer agent.

In addition, a modifier may be introduced into the reaction mixture on the stage of the final condensation of the reaction product with urea. One of the following matters may be chosen as a modifier from the following group: mono- or polybasic alcohols (for example, methanol, and pentaerythritol), starch, polyvinyl alcohol, and polysiloxane liquid and mixtures thereof.

The present invention relates to a method for the production of urea-melamine-formaldehyde resin, preferably with a urea : melamine : formaldehyde mol ratio of 1:0.07:1.2 without the need of concentrating the reaction mixture in vacuum, as recited in claim 1. Inter alia, due to the fact that the present invention allows for the omission of concentrating the reaction mixture in vacuum, the claimed method is environmentally sound.

The claimed method for the production of urea-melamine-formaldehyde resin is characterized by the stepwise performance of an urea-formaldehyde-condensation reaction before performing a co-condensation reaction with melamine, wherein said stepwise performance of an urea-formaldehyde-condensation reaction comprises (or consists of) the addition of urea to the reaction product or products of a first urea- formaldehyde-condensation reaction, and wherein said first urea-formaldehyde- condensation reaction is performed at a pH between 5.6 and 9.0, and at a temperature below 80°C and optionally in the presence of a viscosity regulator such as demineralized water. Said first urea-formaldehyde-condensation reaction comprises the addition of urea to a composition comprising formaldehyde (such as urea-formaldehyde concentrate (UFC)), in an amount to reach a formaldehyde : urea mol ratio of from 4.0:1.0 to 4.6:1.0. Preferably, none of the following components is used (i.e., added to the reaction mixture) during the claimed method: phenol, ammonium nitrate, caprolactam, hexamine, monoethanolamine and/or triethanolamine. Accordingly, the claimed resin is preferably not the condensation product of formaldehyde, urea and phenol and is preferably not the condensation product of formaldehyde, urea, melamine and phenol.

Optionally, said first urea-formaldehyde-condensation reaction is performed at a pH between 5.6 and 8.0, preferably between 5.6 and 7.6, and most preferably between 5.6 and 7.2. Preferably, said first urea-formaldehyde-condensation reaction is performed in absence of monoethanloamine.

Optionally, said first urea-formaldehyde-condensation reaction is performed at a temperature below 70°C, preferably below 60°C, more preferably below 50°C and most preferably between 20 and 40 °C.

Said co-condensation reaction with melamine is performed in alkali medium, at pH 9.0 to 10.0 and, optionally, in the presence of a buffer additive such as borax.

Urea-formaldehyde concentrate (UFC), optionally as aqueous solution, is used as formaldehyde feed. The urea-formaldehyde concentrate (UFC) according to the present invention preferably comprises 20-24 % mass urea, 54-60 % mass formaldehyde and up to 0.3 % mass methanol and has a pH of 6.5 to 8.5.

Optionally, at least one modifier or additive such as polysiloxane liquid, starch, polyvinyl alcohol, mono- or polybasic alcohols (such as butanol, ethylene alcohol, glycerin, diethylene glycol, polyethylene glycol, methanol and/or pentaerythritol), or mixtures thereof, is added to the reaction product or products of said co-condensation reaction with melamine, wherein the amount of said modifiers is preferably in the range from 0.5 to 5.0 % mass of the total urea added, more preferably in the range from 1.5 to 4.0 % mass of the total urea added.

Generally, a condensation reaction is a chemical reaction in which two molecules or moieties (functional groups) combine to form one single molecule, together with the loss of a small molecule. Said small molecule may be water. Methylol ureas, for example, may react with a -NHR moiety (R may be H or any other residue) of urea or of a derivative of urea. Methylol ureas are possible (intermediate) products in a urea-formaldehyde-condensation and are typically the products of an addition reaction between formaldehyde and urea or between formaldehyde and a derivative of urea. Said methylol ureas include mono(hydroxymethyl)urea and poly(hydroxymethyl)urea such as bis(hydroxymethyl)urea.

A series of condensation steps may take place whereby monomers or monomer chains add to each other to form longer chains. This is sometimes termed "condensation polymerization" or "step-growth polymerization". Urea-formaldehyde condensation reactions may or may not be such condensation polymerizations.

In the context of the present invention, urea-formaldehyde condensations (such as said first and second urea-formaldehyde condensation) are chemical reactions whose educts comprise or consist of urea, formaldehyde and optionally also methylol ureas (i.e., this definition does not exclude the presence of intermediate products such as mono(hydroxymethyl)urea and poly(hydroxymethyl)urea) and optionally a viscosity regulator and/or a solvent such as water and/or methanol. Typically, a reaction mixture comprising urea and formaldehyde is heated when performing a urea- formaldehyde condensation. As formaldehyde feed, urea-formaldehyde concentrate (UFC) may be used. The course of a urea-formaldehyde condensation reaction is mainly determined by the amounts of the educts, by the reaction temperature and by the pH of the reaction mixture.

In the context of the present invention, the terms *"co-condensation with melamine"* and "*co-condensation reaction with melamine"* are used synonymously and stand for chemical reactions whose educts comprise or consist of melamine, the reaction product or products of a urea-formaldehyde condensation according to the present invention and optionally borax and/or a solvent. According to the present invention, the co-condensation with melamine is preferably performed in the presence of a polyborate salt, preferably in alkali medium. Said polyborate salt is preferably a sodium polyborate such as borax (e.g. sodium tetraborate decahydrate).

The present invention is also directed to the use of demineralized or deionized water as viscosity regulator during the production of a urea-melamine formaldehyde resin, in particular during said first urea-formaldehyde condensation. In the context of the present invention, the terms *"demineralized water"* and *"deionized water*" are used synonymously.

Generally, an acidic reaction medium may be neutralized with any appropriate alkaline neutralizing agent known in the art, such as an alkali metal hydroxide, alkali metal carbonates, alkaline earth hydroxides, organic amines, or mixtures thereof. Preferably, NaOH is used. Similarly, an alkali reaction medium may be neutralized with any appropriate acidic neutralizing agent known in the art, such as H₂SO₄ (sulfuric acid), benzene sulphonic acid, and ammonium chloride solution.

In a preferred embodiment, the method according to the present invention comprises the following steps or consists of the following steps:
(1) providing a composition comprising formaldehyde, preferably at a pH of 6.5-8.5, such as providing a urea-formaldehyde concentrate (UFC);
(2) providing an amount of urea to reach an formaldehyde : urea mol ratio of from 1.5:1.0 to 2.5:1.0, preferably of from 1.98:1.0 to 2.3:1.0, and dividing said amount of urea into two equal batches of urea and thus providing a first and a second batch of urea; adding one of said two batches of urea to said composition comprising formaldehyde;
(3) optionally adding a viscosity regulator to the mixture, such as demineralized or deionized water;
(4) agitating the mixture, preferably until complete dissolution of the added batch of urea, at a temperature less than 80°C, preferably less than 60°C, more preferably less than 50°C and most preferably at a temperature between 20 and 40 °C, and adjusting the pH to a value between 5.6 and 9.0, preferably between 5.6 and 8.0, more preferably between 5.6 and 7.6, and most preferably between 5.6 and 7.2; it is believed that a first urea-formaldehyde condensation reaction is performed during step (2), (3) and/or (4)
(5) adding the second batch of urea, followed by agitating the mixture at a temperature less than 70°C, and subsequently heating the mixture under agitation, to 80-100°C, preferably to 90-92°C; then ageing the mixture preferably for at least 10-15 minutes. Preferably no ammonium nitrate is added before, during and/or after said aging.
(6) adjusting the temperature of the mixture, preferably to 80-82°C, and adjusting the pH of the mixture to 3.0-5.5, preferably to 4.5-5.5, preferably with a 2 % H₂SO₄ solution. Preferably, the reaction is continued until the addition of 1-10 drops of the reaction mixture to 10-1000 ml cold water causes stable turbidness. The most widely used measurement unit for turbidity is the FTU (Formazin Turbidity Unit), also referred to as Nephelometric Turbidity Unit (NTU). "Stable turbidness" means that the NTU is at least 100 and does not significantly change over time. It is believed that a second urea-formaldehyde condensation reaction, i.e. an acid condensation, is performed during steps (5) and/or (6);
(7) raising the pH of the mixture to obtain an alkali medium with the pH of the mixture of 9.0-10.0, preferably with a NaOH solution;
(8) adding melamine and optionally adding at least one additive (e.g. a buffer additive) such as borax to the reaction mixture, preferably at the temperature of 70-90°C, for performing a co-condensation reaction with melamine at a temperature of 80-88°C, the amount of melamine being in the range of 0.04 to 0.25 mol melamine per 1 mol urea; continuing said reaction at pH 9.0-10.0 and preferably at the temperature of 80°C and preferably for 20-30 minutes. Said additive is preferably a polyborate salt and more preferably a sodium polyborate such as borax (e.g. sodium tetraborate decahydrate).
(9) adjusting the temperature of the reaction mixture to a temperature of 50 to 80°C, preferably to a temperature of 60 to 70°C;
(10) adding a third batch of urea and optionally adding formaldehyde (preferably in the form of urea-formaldehyde concentrate (UFC)) to the reaction mixture to reach a formaldehyde : urea mol ratio in the range of 1.1:1 to 1.2:1, preferably to reach a formaldehyde : urea : melamine mol ratio of 1.2:1:0.07; said urea-formaldehyde concentrate (UFC) comprises 20-24 % mass urea, 54-60 % mass formaldehyde and up to 0.3 % mass methanol and has a pH of 6.5 to 8.5;
(11) optionally adding at least one modifier or additive such as polysiloxane liquid, starch, polyvinyl alcohol, mono- or polybasic alcohols, such as methanol and pentaerythritol, or mixtures thereof, preferably in an amount of 0.5 to 5.0 % mass of the total urea added, more preferably in an amount of 1.5 to 4.0 % mass of the total urea added;
(12) agitating the reaction mixture at a temperature between 65 and 70°C and preferably for at least 30-35 minutes and then cooling the reaction mixture to 25-30°C, preferably to room temperature; it is believed that a further, final condensation reaction is performed during step (10), (11) and/or (12).

The present invention is also directed to urea-melamine-formaldehyde resin obtainable according to the above outlined steps (1) to (12). Preferably, the urea-melamine-formaldehyde resin according to the present invention has a formaldehyde : urea : melamine mol ratio between 1.1:1:0.07 and 1.2:1:0.07 or between 1.2:1:0.04 and 1.2:1:0.25. More preferably the formaldehyde : urea : melamine mol ratio is in the range (1.1 to 1.2):1:(0.04 to 0.25), wherein the amount of formaldehyde and melamine are selected independently from each other. Most preferably, the formaldehyde : urea : melamine mol ratio is 1.2:1:0.07.

The present invention is also directed to the use of the urea-melamine-formaldehyde resin according to the present invention as adhesive, e.g. as furniture adhesive or as plywood adhesive. Said adhesive is preferably used for gluing paper, wood, carton or mixtures thereof. Accordingly, the urea-melamine-formaldehyde resin according to the present invention can be used for the production of composite materials such as resin bonded and cellulose-fibre chipboards and other materials used in construction industry and machinery manufacturing.

The present invention is also directed composite materials comprising the urea- melamine-formaldehyde resin according to the present invention, and objects comprising said composite materials, such as composite boards, bonded and cellulose-fibre chipboards, particle boards and medium density fiber boards (MDF).

Skilled practitioners recognize that the reactants are commercially available in many forms. Any form which can react with the other reactants and which does not introduce extraneous moieties deleterious to the desired reaction and reaction product can also be used in the claimed methods, such as in the preparation of the urea- melamine-formaldehyde resin of the present invention.

Formaldehyde is available in many forms. Paraform (solid, polymerized formaldehyde) and formalin solutions (aqueous solutions of formaldehyde, sometimes with methanol, in 37 percent, 44 percent, or 50 percent formaldehyde concentrations) are commonly used forms. Formaldehyde also is available as a gas. Any of these forms is suitable for use in the practice of the invention. Typically, formalin solutions are preferred as the formaldehyde source.

Similarly, urea is available in many forms. Solid urea, such as prill, and urea solutions, typically aqueous solutions, are commonly available. Further, urea may be combined with another monomer, most typically formaldehyde and urea-formaldehyde, often in aqueous solution. Any form of urea or urea in combination with formaldehyde is suitable for use in the practice of the invention. Both urea prill and combined urea-formaldehyde products are preferred, such as Urea Formaldehyde Concentrate or UFC 85.

Although melamine is specifically mentioned, in the practice of this invention, the melamine may be totally or partially replaced with other aminotriazine compounds. Other suitable aminotriazine compounds include substituted melamines, or cycloaliphatic guanamines, or mixtures thereof. Substituted melamines include the alkyl melamines and aryl melamines which can be mono-, di-, or tri-substituted. In the alkyl substituted melamines, each alkyl group can contain 1-6 carbon atoms and, preferably 1-4 carbon atoms. Typical examples of some of the alkyl-substituted melamines are monomethyl melamine, dimethyl melamine, trimethyl melamine, monoethyl melamine, and 1-methyl-3-propyl-5-butyl melamine. In the aryl- substituted melamines, each aryl group can contain 1-2 phenyl radicals and, preferably, 1 phenyl radical. Typical examples of an aryl-substituted melamine are monophenyl melamine and diphenyl melamine.

The below examples can illustrate the claimed invention, however, do not limit its possible application.

### Example No.1

A reactor furnished with an agitator, a backflow condenser, and a thermometer is loaded with UFC, demineralized water and urea with formaldehyde : urea mol ratio = F:U = 1.98:1. Urea is divided into two batches (equal I and II). After the complete dissolution of the first urea batch a pH-test of the reaction mixture is made, and pH value should be in the range 5.6-7.2. After that the second urea batch is loaded and the mixture under agitation is heated up to 90-92°C. Further the temperature of the reaction mixture is reduced to 80-82°C and, H₂SO₄ 2%-solution, for example, is added to obtain pH level of the reaction mixture equal to 4.5-5.5. Then the reaction mixture is aged. Further, the mixture is neutralized, for example, with NaOH 4%-solution to obtain pH level 9.0-10.0, and afterwards borax and melamine are loaded. The condensation of the mixture is performed with pH 9.0-10.0 at 80°C. Then the reaction mixture temperature is decreased to 70°C. After that an additional amount of urea is introduced to reach formaldehyde : urea : melamine mol ratio = F:U:M =1.2 :1: 0.07 and the condensation continues with pH = 8.0-8.5 at 65-70°C. Then, the reaction mixture is cooled to 25-30°C and discharged.

### Example No. 2

A reactor furnished with an agitator, a backflow condenser, and a thermometer is loaded with UFC, demineralized water and urea with formaldehyde : urea mol ratio - F:U = 2.1:1. Urea is divided into two batches (equal I and II). After the complete dilution of the first urea batch a pH-test of the reaction mixture is made, and pH value should be in the range 5.6-7.2. After that the second urea batch is loaded and the mixture under agitation is heated up to 90-92°C. Further the temperature of the reaction mixture is reduced to 80-82°C and, H₂SO₄ 2%-solution, for example, is added to obtain pH level of the reaction mixture equal to 4.5-5.5. Then the reaction mixture is aged. Further, the mixture is neutralized, for example, with NaOH 4%-solution to obtain pH level 9.0-10.0, and afterwards borax and melamine are loaded. The condensation of the mixture is performed with pH 9.0-10.0 at 80°C. Then, the reaction mixture temperature is decreased to 70°C. After that an additional amount of urea is introduced to reach formaldehyde : urea : melamine mol ratio = F:U:M = 1.2:1:0.07 and the condensation continues with pH = 8.0-8.5 at 65-70°C. Then the reaction mixture is cooled to 25-30°C and discharged.

### Example No. 3

A reactor furnished with an agitator, a backflow condenser, and a thermometer is loaded with UFC, demineralized water and urea with formaldehyde : urea mol ratio = F:U = 2.3:1. Urea is divided into two batches (equal I and 11). After the complete dilution of the first urea batch a pH-test of the reaction mixture is made, and pH value should be in the range 5.6-7.2. After that the second urea batch is loaded and the mixture under agitation is heated up to 90-92°C. Further the temperature of the reaction mixture is reduced to 80-82°C and, H₂SO₄ 2%-solution, for example, is added to obtain pH level of the reaction mixture equal to 4.5-5.5. Then the reaction mixture is aged. Further, the mixture is neutralized, for example, with NaOH 4%-solution to obtain pH level 9.0-10.0, and afterwards borax and melamine are loaded. The condensation of the mixture is performed with pH 9.0-10.0 at 80°C. Then the reaction mixture temperature is decreased to 70°C. After that an additional amount of urea is introduced to reach formaldehyde : urea : melamine mol ratio - F:U:M =1.2:1:0.07 and the condensation continues with pH = 8.0-8.5 at 65-70°C. Then the reaction mixture is cooled to 25-30° C and discharged.

The comparative characteristics of resins produced by the claimed method and traditional methods are presented in the Table.

**Table**

| Properties of Treating Urea-Melamine-Formaldehyde Resins Produced by the Claimed Method and as per Prototype | | | | |
|---|---|---|---|---|
| Properties | Values | | | |
| | Prototype | Examples | | |
| | | 1 | 2 | 3 |
| Formaldehyde : urea: melamine mol ratio | (1.0-1.3):1:(0.04-0.25) | 1.2:1:0.07 | 1.2:1:0.07 | 1.2:1:0.07 |
| Mass fraction of dry residue, % | 54-67.5 | 62 | 67 | 63 |
| Mass fraction of free formaldehyde in resin, % | 0.04-0.07 | 0.06 | 0.05 | 0.04 |
| Hydrogen ion concentration, pH | 7.7-8.7 | 7.7-8.7 | 7.7-8.7 | 7.7-8.7 |
| Resin storage time, months | >6 | >6 | >6 | >6 |

Thus, by applying the claimed method it is possible to produce high quality urea-melamine-formaldehyde resins excluding vacuuming stage and thus, the claimed method solves at least three problems, i.e.:
a) improving environmental safety by excluding waste water formation;
b) reducing energy consumption for resin synthesis; and
c) improving the resin quality.

## Claims

1. A method for the production of urea-melamine-formaldehyde resin, **characterized by** a stepwise condensation of urea with formaldehyde to a prepolymer carried out before performing a co-condensation reaction with melamine, said stepwise condensation comprising the steps:
(a) providing an urea-formaldehyde concentrate (UFC);
(b) adding urea to the urea-formaldehyde concentrate (UFC) of the step (a) and performing a first urea-formaldehyde-condensation reaction at a pH between 5.6 and 9.0, and at a temperature below 80°C;
(c) adding urea to the reaction products of said first urea-formaldehyde-condensation reaction to reach formaldehyde : urea mol ratio of from 1.5:1.0 to 2.5:1.0, an amount of urea added at this step being equal to the amount of urea added at the step (b) to the urea-formaldehyde concentrate (LTFC) of the step (a), followed by agitating the mixture at a temperature less than 70°C;
(d) heating the mixture of the step (c) to a temperature of 80 to 100°C under agitation and performing a second urea-formaldehyde-condensation reaction at a pH of 3.0 to 5.5, then ageing the mixture;
(e) raising the pH of the reaction products of said second urea-formaldehyde-condensation reaction to 9.0-10.0 and adding melamine in the amount of 0.04-0.25 mol melamine per 1 mol of urea;
(f) performing melamine-formaldehyde-condensation reaction at a pH of 9.0 to 10.0 and at a temperature of 80 to 88°C;
(g) adjusting the temperature of the reaction mixture of the step (f) to a temperature of 50 to 80°C, and adding urea and optionally further formaldehyde as the composition comprising formaldehyde of the step (a) to the reaction products of said melamine-formaldehyde-condensation reaction, cooled previously, thus reaching formaldehyde : urea mol ratio equal to (1.1-1.2):1; and
(h) performing a third urea-formaldehyde-condensation reaction at a temperature of 65 to 70°C with agitating and then cooling the reaction mixture to 25-30°C.

2. The method according to claim 1, wherein said first urea-formaldehyde-condensation reaction is performed at a pH between 5.6 and 8.0.

3. The method according to claim 1 or 2, wherein said first urea-formaldehyde-condensation reaction is performed at a temperature below 70 °C.

4. The method according to any one of claims 1 to 3, wherein said co-condensation reaction with melamine is performed in the presence of a polyborate salt buffer additive such as borax.

5. The method according to any one of claims 1 to 4, wherein at least one modifier or additive such as polysiloxane liquid, starch, polyvinyl alcohol, mono- or polybasic alcohols, such as pentaerythritol, or mixtures thereof, is added to the reaction product of said co-condensation reaction with melamine, wherein the amount of said modifiers is in the range from 0.5 to 5.0 % mass of the total urea added.

6. The method according to any one of claims 1 to 5 comprising the steps:
(i) optionally adding a viscosity regulator to the mixture of the step (b), such as demineralized or deionized water;
(j) agitating the mixture of the step (b) until complete dissolution of the added first batch of urea, at a temperature less than 70°C;
(k) adjusting the temperature of the mixture of the step (d) to 75-85°C and adjusting the pH of the mixture to 3.0-5.5 with a H₂SO₄ solution, then ageing the mixture for at least 10-15 minutes;
(1) raising the pH of the mixture of the step (k) to 9.0-10.0 with a NaOH solution;
(m) adding melamine in the amount of 0.04-0.25 mol melamine per 1 mol of urea and at least one buffer additive such as polyborate salt to the mixture of the step (1) and continuing the condensation reaction at a pH of 9.0 to 10.0 and at a temperature of 80 to 88°C.

7. The method according to any one of claims 1 to 6, wherein said urea-formaldehyde concentrate (UFC) comprises 20-24% mass urea, 54-60% mass formaldehyde and up to 0.3% mass methanol and has a pH of 6.5 to 8.5.

8. The method according to any one of claims 6 to 7, wherein step (d) comprises adjusting the temperature of the mixture produced at the step (c) to 80-82°C, and adjusting the pH of the mixture to 4.5-5.5 with a 2% H₂SO₄ solution; and continuing the reaction until the addition of 1-10 drops of the reaction mixture to 10-1000 ml cold water causes stable turbidity.

9. The method according to any one of claims 6 to 8, wherein the steps (e) and (f) comprise raising the pH of the mixture produced at the step (d) with a NaOH solution to obtain an alkali medium with the pH of the mixture of 9.0-10.0 followed by adding melamine and optionally adding at least one buffer additive such as borax to the reaction mixture for performing a co-condensation reaction with melamine, at a temperature of 70-90°C, the amount of melamine being in the range of 0.04 to 0.25 mol melamine per 1 mol urea, continuing said reaction at the temperature of about 80°C during 20-30 minutes.

10. Urea-melamine-formaldehyde resin prepared according to any one of claims 1 to 9, wherein the formaldehyde : urea : melamine mol ratio of the resin prepared is between 1.1:1:0.07 and 1.2:1:0.07 or between 1.2:1:0.06 and 1.2:1:0.08.

11. Urea-melamine-formaldehyde resin according to claim 10, wherein the formaldehyde : urea : melamine mol ratio of the resin prepared is 1.2:1:0.07.

12. Use of the resin according to claim 10 or 11 as adhesive such as furniture or plywood adhesive, preferably for gluing paper, wood, carton or mixtures thereof, in particular for the production of composite materials such as resin bonded and cellulose-fiber chipboards and other materials used in construction industry and machinery manufacturing.

13. Composite materials, such as composite boards, comprising the urea-melamine-formaldehyde resin of claim 10 or 11, and objects comprising said composite materials.

## Patentansprüche

1. Ein Verfahren zur herstellung des Harnstoff-Melamin-Formaldehydharzes, **dadurch gekennzeichnet, dass** die Stufenkondensation des Harnstoffes mit Formaldehyd für die Erzeugung des Vorpolymers bis zur Co-Kondensationsreaktionsführung mit Melamin durchgeführt wird, dabei enthält die erwähnte Stufenkondensation die folgenden Schritte:
(a) die Erzeugung des Harnstoff-Formaldehydkonzentrates (HFK);
(b) die Zugabe des Harnstoffes zu dem beim Schritt (a) erzeugten Harnstoff-Formaldehydkonzentrates (HFK) und die Durchführung der ersten Kondensationsreaktion des Harnstoff-Formaldehyds beim pH-Wert im Bereich von 5,6 bis 9,0 und bei der Temperatur unter 80 °C;
(c) die Zugabe des Harnstoffes zu den Reaktionsprodukten der ersten erwähnten Kondensationsreaktion des Harnstoff-Formaldehyds für die Erzeugung des Molverhältnisses Formaldehyd: Harnstoff von 1,5:1,0 bis 2,5:1,0, dabei ist die Harnstoffmenge, die bei diesem Schritt zugegeben wird, gleich der Harnstoffmenge, die beim Schritt (b) zu dem beim Schritt (a) erzeugten Harnstoff-Formaldehydkonzentrates (HFK) zugegeben wurde, dann wird das Gemisch bei der Temperatur unter 70 °C durchgerührt;
(d) die Erhitzung des beim Schritt (c) erzeugten Gemisches bis zur Temperatur von 80 bis 100 °C unter der Umrühren und die Durchführung der zweiten Kondensationsreaktion des Harnstoff-Formaldehyds beim pH-Wert im Bereich von 3,0 bis 5,5, dann das Stehenlassen des Gemisches;
(e) die Erhöhung des pH-Wertes von Reaktionsprodukten der erwähnten zweiten Kondensationsreaktion des Harnstoff-Formaldehyds bis 9,0-10,0 und die Melaminzugabe in der Menge von 0,04-0,25 Mol pro 1 Mol des Harnstoffes;
(f) die Kondensationsreaktionsdurchführung des Melamin-Formaldehyds beim pH-Wert im Bereich von 9,0 bis 10,0 und bei der Temperatur von 80-88 °C;
(g) das Bringen der Temperatur des beim Schritt (f) erzeugten Reaktionsgemisches bis zur Temperatur von 50 bis 80 °C und die Zugabe des Harnstoffes und nicht unbedingt des weiteren Formaldehyds, in der Form der Formaldehyd enthaltenen Zusammensetzung, die beim Schritt (a) erzeugt wurde, zu den vorgekühlten Produkten der erwähnten Kondensationsreaktion des Harnstoff-Formaldehyds mit der Erzeugung auf dieser Weise des Molverhältnisses Formaldehyd : Harnstoff von (1,1-1,2):1; und
(h) die Durchführung der dritten Kondensationsreaktion des Harnstoff-Formaldehyds bei der Temperatur 65-70 °C mit Umrühren und nachfolgender Kühlung des Reaktionsgemisches bis zur Temperatur 25-30 °C.

2. Das Verfahren gemäß Anspruch 1, in dem die erste erwähnte Kondensationsreaktion des Harnstoff-Formaldehyds beim pH-Wert im Bereich von 5,6 bis 8,0 durchgeführt wird.

3. Das Verfahren gemäß Ansprüchen 1 oder 2, in dem die erste erwähnte Kondensationsreaktion des Harnstoff Formaldehyds bei der Temperatur unter 70° C durchgeführt wird.

4. Das Verfahren gemäß einem beliebigen der Ansprüche 1-3, in dem die erwähnte Co-Kondensationsreaktion mit Melamin mit dem Pufferzusatz des Polyboratsalzes, z.B. des Boraxes durchgeführt wird.

5. Das Verfahren gemäß einem beliebigen der Ansprüche 1-4, in dem mindestens ein Modifikationsmittel oder Zusatz, z.B. Polysiloxanflüssigkeit, Stärkemehl, Polyvinylalkohol, mono- und mehrbasische Alkohole, z.B. Pentaerythrit oder deren Gemische zum Produkt der erwähnten Co-Kondensationsreaktion mit Melamin zugegeben wird, dabei beträgt die Menge der erwähnten Modifikationsmittel 0,5-5,0% von der Gesamtmasse des zugegebenen Harnstoffes.

6. Das Verfahren gemäß einem beliebigen der Ansprüche 1-5, der die folgenden Schritte enthält:
(i) nicht unbedingte Zugabe des Zähigkeitsreglers zu dem beim Schritt (b) erzeugten Gemisch, z.B. des entmineralisierten oder entionisierten Wassers;
(j) die Vermischung des beim Schritt (b) erzeugten Gemisches bis zum vollständigen Lösen der zugegebenen ersten Harnstoffportion bei der Temperatur unter 70 °C;
(k) das Bringen der Temperatur des beim Schritt (d) erzeugten Gemisches bis 75-85 °C und das Bringen des pH-Wertes des Gemisches bis 3,0-5,5 durch die Zugabe der H₂SO₄-Lösung, dann das Stehenlassen des Gemisches innerhalb von mindestens 10-15 Minuten;
(l) die Erhöhung des pH-Wertes des beim Schritt (k) erzeugten Gemisches, bis 9,0-10,0 durch die Zugabe der NaOH-Lösung;
(m) die Zugabe des Melamins in der Menge von 0,04-0,25 Mol des Melamins pro 1 Mol des Harnstoffes und mindestens eines Pufferzusatzes, z.B. Polyboratsalzes zu dem beim Schritt (1) erzeugten Gemisch und die Kondensationsreaktionsfortsetzung beim pH-Wert im Bereich von 9,0-10,0 und bei der Temperatur von 80-88 °C.

7. Das Verfahren gemäß einem beliebigen der Ansprüche 1-6, in dem das erwähnte Harnstoff-Formaldehydkonzentrat (HFK) den Massenanteil des Harnstoffes von 20-24%, des Formaldehyds von 54-60% und des Methanols bis 0,3% hat und den pH-Wert von 6,5-8,5 aufweist.

8. Das Verfahren gemäß einem beliebigen der Ansprüche 6-7, in dem der Schritt (d) das Bringen der Temperatur des beim Schritt (c) erzeugten Gemisches bis 80-82 °C und das Bringen des pH-Wertes des Gemisches bis 4,5-5,5 durch die Zugabe der 2%-gen H₂SO₄-Lösung und die Reaktionsfortsetzung enthält, solange die Zugabe von 1-10 Tropfen des Reaktionsgemisches zu den 10-1000 ml des Kaltwassers zur stabilen Trübung nicht führt.

9. Das Verfahren gemäß einem beliebigen der Ansprüche 6-8, in dem die Schritte (e) und (f) die Erhöhung des pH-Wertes des beim Schritt (d) erzeugten Gemisches durch die Zugabe der NaOH-Lösung mit der Erzeugung des alkalischen Mediums mit dem pH-Wert von 9,0-10,0 und der nachfolgenden Zugabe von Melamin und nicht unbedingten Zugabe mindestens eines Pufferzusatzes, z.B. Boraxes zum Reaktionsgemisch für die Co-Kondensationsreaktionsdurchführung unter Temperatur von 70-90 °C enthalten, dabei beträgt die Melaminmenge 0,04-0,25 Mol des Melamins pro 1 Mol des Harnstoffes, danach wird die erwähnte Reaktion bei der Temperatur ca. 80 °C während 20-30 Minuten durchgeführt.

10. Das Harnstoff-Melamin-Formaldehydharz, der nach einem beliebigen der Ansprüche 1-9 erzeugt wurde, in dem das Molverhältnis Formaldehyd: Harnstoff: Melamin im hergestellten Harz im Bereich von 1,1:1:0,07 bis 1,2:1:0,07 oder von 1,2:1:0,06 bis 1,2:1:0,08 liegt.

11. Das Harnstoff-Melamin-Formaldehydharz gemäß Anspruch 10, in dem das Molverhältnis Formaldehyd: Harnstoff: Melamin im hergestellten Harz 1,2:1:0,07 beträgt.

12. Die Verwendung des Harzes gemäß Ansprüchen 10 oder 11 als Klebstoff, z.B. als Möbel-oder Sperrholzleim, vorzugsweise für die Verleimung von Papier, Holz, Pappe oder deren Kompositionen, unter anderem für die Herstellung von solchen Verbundwerkstoffen, wie Holzspannplatten mit synthetischen Harzen und Holz-Zellstoffplatten und andere im Bau und Maschinenbau zu verwendeten Werkstoffe.

13. Die Verbundwerkstoffe, z.B. Kompositplatten, die das Harnstoff-Melamin-Formaldehydharz gemäß Ansprüchen 10 oder 11 enthalten, und die Gegenstände, die die erwähnten Verbundwerkstoffe enthalten.

## Revendications

1. Procédé pour la production de la résine urée-mélamine-formaldéhyde, **caractérisé par** la condensation par étapes d'urée avec du formaldéhyde pour produire un prépolymère, qui est effectuée avant de réaliser une réaction de co-condensation avec de la mélamine, ladite condensation par étapes comprenant les étapes consistant à :
(a) la préparation d'un concentré d'urée-formaldéhyde (CUF) ;
(b) l'ajout d'urée au concentré d'urée-formaldéhyde (CUF) de l'étape (a) et la réalisation de la première réaction de condensation d'urée-formaldéhyde à un pH compris entre 5,6 et 9,0 et à une température inférieure à 80 °C ;
(c) l'ajout d'urée aux produits de ladite première réaction de condensation d'urée-formaldéhyde pour obtenir le rapport molaire formaldéhyde : urée de 1,5 : 1,0 à 2,5 : 1,0, une quantité d'urée
ajoutée à cette étape étant égale à la quantité d'urée ajoutée à l'étape (b) au concentré d'urée-formaldéhyde (CUF) de l'étape (a), puis le mélange est agité à une température inférieure à 70 °C ;
(d) le chauffage du mélange de l'étape (c) à une température de 80 à 100 °C sous agitation et la réalisation de la deuxième réaction de condensation d'urée-formaldéhyde à un pH de 3,0 à 5,5, puis le vieillissement du mélange ;
(e) l'augmentation du pH des produits de ladite deuxième réaction de condensation d'urée-formaldéhyde à 9,0-10,0 et l'ajout de mélamine à la quantité de 0,04-0,25 mole de mélamine pour 1 mole d'urée ;
(f) la réalisation d'une réaction de condensation de mélamine-formaldéhyde à un pH de 9,0 à 10,0 et à une température de 80 à 88 °C ;
(g) le réglage de la température du mélange réactionnel de l'étape (f) à une température de 50 à 80 °C et l'ajout d'urée et éventuellement de formaldéhyde supplémentaire en tant que composition comprenant du formaldéhyde de l'étape (a) aux produits de ladite réaction de condensation de mélamine-formaldéhyde, refroidis préalablement, obtenant ainsi le rapport molaire formaldéhyde : urée égal à (1.1-1.2) : 1 ; et
(h) la réalisation de la troisième réaction de condensation d'urée-formaldéhyde à une température de 65 à 70 °C sous agitation, puis le refroidissement du mélange réactionnel à 25-30 °C.

2. Procédé selon la revendication 1, dans lequel ladite première réaction de condensation d'urée-formaldéhyde est effectuée à un pH compris entre 5,6 et 8,0.

3. Procédé selon la revendication 1 ou 2, dans lequel ladite première réaction de condensation d'urée-formaldéhyde est effectuée à une température inférieure à 70 °C.

4. Procédé selon l'une quelconque des revendications 1 à 3, dans lequel ladite réaction de co-condensation avec de la mélamine est effectuée en présence d'un additif tampon de sel de polyborate tel que le borax.

5. Procédé selon l'une quelconque des revendications 1 à 4, dans lequel au moins un modificateur ou additif tel que le liquide de polysiloxane, l'amidon, l'alcool polyvinylique, les alcools mono- ou polybasiques, tels que le pentaérythritol, ou leurs mélanges, est ajouté au produit de ladite réaction de co-condensation avec de la mélamine, dans lequel la quantité desdits modificateurs se situe dans la plage de 0,5 à 5,0% de la masse d'urée totale ajoutée.

6. Procédé selon l'une quelconque des revendications 1 à 5, comprenant les étapes consistant à :
(i) l'ajout éventuel d'un régulateur de viscosité au mélange de l'étape (b), tel que de l'eau déminéralisée ou désionisée ;
(j) l'agitation du mélange de l'étape (b) jusqu'à la dissolution complète du premier lot d'urée ajouté, à une température inférieure à 70 °C ;
(k) le réglage de la température du mélange de l'étape (d) à 75-85 °C et le réglage du pH du mélange à 3,0-5,5 avec une solution de H₂SO₄, puis le vieillissement du mélange pendant au moins 10 à 15 minutes ;
(l) l'augmentation du pH du mélange de l'étape (k) à 9,0-10,0 avec une solution de NaOH ;
(m) l'ajout de mélamine en une quantité de 0,04 à 0,25 mole de mélamine pour 1 mole d'urée et au moins un additif tampon tel que du sel de polyborate au mélange de l'étape (1) et la poursuite de la réaction de condensation à un pH de 9,0 à 10,0 et à une température de 80 à 88 °C.

7. Procédé selon l'une quelconque des revendications 1 à 6, dans lequel ledit concentré d'urée-formaldéhyde (CUF) comprend 20 à 24% (masse) d'urée, 54 à 60% (masse) de formaldéhyde et jusqu'à 0,3% (masse) de méthanol et a un pH de 6,5 à 8.5.

8. Procédé selon l'une quelconque des revendications 6 à 7, dans lequel l'étape (d) comprend le réglage de la température du mélange produit à l'étape (c) à 80-82 °C et le réglage du pH du mélange à 4,5- 5,5 avec une solution à 2% de H₂SO₄; et la poursuite de la réaction jusqu'à ce que l'ajout de 1 à 10 gouttes du mélange réactionnel à 10 à 1000 ml d'eau froide provoque une turbidité stable.

9. Procédé selon l'une quelconque des revendications 6 à 8, dans lequel les étapes (e) et (f) comprennent l'augmentation du pH du mélange produit à l'étape (d) avec une solution de NaOH pour obtenir un milieu alcalin au pH du mélange de 9,0 à 10,0, puis on ajoute de la mélamine et ajoute éventuellement au moins un additif tampon tel que le borax au mélange réactionnel pour effectuer une réaction de co-condensation avec de la mélamine à une température de 70 à 90 °C, la quantité de mélamine étant dans la plage de 0,04 à 0,25 mole de mélamine par 1 mole d'urée, puis ladite réaction est continuée à la température d'environ 80 °C pendant 20 à 30 minutes.

10. Résine urée-mélamine-formaldéhyde préparée selon l'une quelconque des revendications 1 à 9, dans laquelle le rapport molaire formaldéhyde : urée : mélamine de la résine produite est compris entre 1,1 : 1 : 0,07 et 1,2 : 1 : 0,07 ou entre 1,2 : 1 : 0,06 et 1,2 : 1 : 0,08.

11. Résine urée-mélamine-formaldéhyde selon la revendication 10, dans laquelle le rapport molaire formaldéhyde : urée : mélamine de la résine produite est de 1,2 : 1 : 0,07.

12. Utilisation de la résine selon la revendication 10 ou 11 comme adhésif tel qu'un adhésif pour meuble ou contreplaqué, de préférence pour coller du papier, du bois, du carton ou des mélanges de ceux-ci, en particulier pour la production de matériaux composites tels que des panneaux agglomérés de bois liés à la résine et des panneaux de cellulose et fibres de bois et d'autres matériaux utilisés dans l'industrie de la construction et la fabrication de machines.

13. Matériaux composites, tels que des panneaux composites, comprenant la résine urée-mélamine-formaldéhyde de la revendication 10 ou 11, et des objets comprenant lesdits matériaux composites.
